# EUROPEAN PATENT SPECIFICATION

(11) **EP 3 148 292 B1**
(45) Date of publication and mention of the grant of the patent: **12.08.2020**
(21) Application number: 15187093.8
(22) Date of filing: 28.09.2015
(51) Int. Cl.: H05B 3/44, B29C 63/42

(54) **HEATING APPARATUS AND METHOD FOR HEATING A TUBULAR BODY**
HEIZVORRICHTUNG UND VERFAHREN ZUM HEIZEN EINES ROHRFÖRMIGEN KÖRPERS
APPAREIL DE CHAUFFAGE ET PROCÉDÉ DE CHAUFFAGE D'UN CORPS TUBULAIRE

(43) Date of publication of application: 29.03.2017
(73) Proprietor: Frans Nooren Afdichtingssystemen B.V., 9503 JB Stadskanaal (NL)
(72) Inventor: Doddema, Jan Frederik, 9461 HV Gielen (NL); Hofstee, Sander Hendrikus Johannes, 8940 Geluwe (BE)
(74) Representative: Jones Day

(56) References cited:
- EP-A2- 0 510 803
- WO-A1-2013/067631
- WO-A2-2012/114127
- JP-A- S60 262 879
- US-A- 5 249 410
- US-A- 5 618 253

## Description

### Field of the invention

The present invention relates to heating apparatus for heat treatment of a tubular body, such as a sealing sleeve or heat shrinkable sealing sleeve on a pipe joint. In a further aspect the present invention relates to a method for heating a tubular body.

### Prior art

International patent application WO2013/067631 discloses an apparatus containing multiple sequentially used infrared (IR) heating zones for tubular articles, such as heat shrinkable sleeves applied around a welded pipe joint. The apparatus comprises a (static) frame which can be disposed around the article, in which a plurality of (IR) heating sources are positioned in a circumferential direction as well as a longitudinal direction. The heaters can be controlled individually to obtain a desired heating pattern.

US patent publication US 5,073,108 discloses an apparatus for heating a length of a pipe and/or sleeve mounted thereon, using a bifurcated (clamp type of) arrangement with (IR) annular heater means arranged on the inside. The apparatus is further arranged to move in a longitudinal direction along the pipe, e.g. using a suitable carriage and a guide bar.

### Summary of the invention

The present invention seeks to provide an improved apparatus for heat treatment of a tubular body, such as a sealing sleeve or heat shrinkable sealing sleeve on a pipe, a pipe joint or a pipe assembly and the like, wherein the apparatus provides a higher application quality of the tubular body.

According to the present invention, an apparatus according the type defined in the preamble is provided, comprising a support structure and a frame moveably suspended in the support structure and arranged to enclose an outer surface part of the tubular body in operation. The frame comprises thermal emitters circumferentially arranged around the outer surface part of the tubular body, wherein an oscillating actuator is connected to the support structure and the frame, and wherein the oscillating actuator is arranged to impose an oscillating movement of the frame with respect to the support structure in circumferential direction around the outer surface part of the tubular body.

The heating apparatus of the present invention allows for improved homogenous and uniform heating of the tubular body, so that a higher application quality of the tubular body to a pipe, a pipe joint, or a pipe assembly is obtained.

In further embodiments, the support structure is provided with a drive actuator arranged to provide longitudinal movement of the frame with respect to the tubular body. The oscillating actuator and drive actuator may be simultaneously operable, allowing an oscillating movement in combination with a longitudinal movement of the frame, e.g. to obtain a cork screw or other complex pattern.

Each of the thermal emitters provides a beam irradiating a target surface on the tubular body in operation in a further embodiment, and the thermal emitters are mutually separated at a circumferential separation distance such that the target surface of one of the thermal emitters abuts the target surface of an adjacent one of the thermal emitters. The circumferential separation distance between adjacent thermal emitters may be between 7 and 20 cm, e.g. 10 cm. This accomplishes a neat and uniform heating of the tubular body over a large operating surface.

Each of the thermal emitters may be adjustable in a radial direction, allowing a change of the resulting spot size on the target surface on the tubular body, making the heater apparatus also adjustable for a number of predetermined tubular body diameters. Each of the thermal emitters may comprise an infrared thermal emitter, e.g. a quartz tube with a wire heater.

The oscillating actuator is arranged to provide a linear or sinusoidal oscillating movement, or an oscillating movement with a predetermined movement pattern. Alternatively, the oscillating actuator is arranged to provide a linear oscillating movement with a speed of about 6 to 10 cm per second, e.g. 8 cm per second. In an even further embodiment, the oscillating actuator is arranged to provide an oscillating movement with an oscillation displacement angle *α* of less than 90 degrees, e.g. about 10 degrees in the circumferential direction.

In a further aspect of the present invention, a method a for heating a tubular body is provided using thermal emitters arranged in a circumferential direction around the tubular body, wherein each of the thermal emitters provides a heating zone on a target surface of an outer surface part of the tubular body, and the heating zones of two adjacent thermal emitters abut each other, and wherein the thermal emitters are moved in the circumferential direction in an oscillating manner. Additionally, the thermal emitters may be moved in a longitudinal direction along the tubular body, dependent or independent of the oscillating movement.

Also described herein is a closure patch for application in heat shrinking a tubular body on a pipe assembly, the closure patch being applied to hold the tubular body in its position with respect to the pipe assembly before applying the present invention method embodiments. This may provide for a high quality and highly consistent sealing of the tubular body on the pipe assembly. The closure patch e.g. comprises a pressure sensitive adhesive tape having a temperature resistant backing, such as fiber glass, PET film, etc., and a high temperature resistant adhesive layer.

### Short description of drawings

The present invention will be discussed in more detail below, using a number of exemplary embodiments, with reference to the attached drawings, in which
Figure 1 shows a cross section of an embodiment of a heating apparatus according to the present invention;
Figure 2 shows an embodiment of a plurality of heating zones for heating a part of a tubular body as used in the present invention; and
Figure 3 and 4 each show an embodiment of a plurality of heating zones on a tubular body as used in the present invention.

### Detailed description of exemplary embodiments

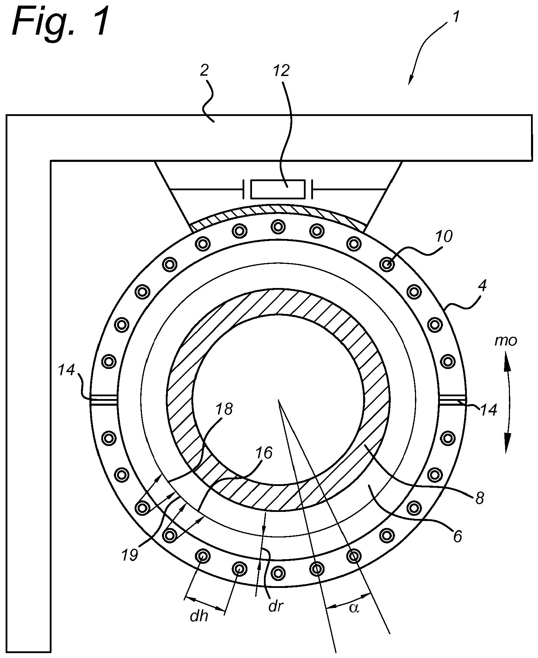

Figure 1 shows an embodiment of a heating apparatus according to the present invention. In the embodiment shown, a pipe, a pipe joint, or pipe assembly 8 is in part enclosed by a tubular body 6 for e.g. repairing a leak in the pipe 8 or for sealing a pipe joint. In an embodiment the tubular body 6 is a sealing sleeve or a heat shrinkable sealing sleeve. To firmly apply the tubular body 6 to the pipe 8, a heating apparatus 1 is provided comprising a support structure 2 and a frame 4 moveably suspended therein or moveably connected thereto. The support structure 2 need not be a full enclosure but may be envisaged as a main structure to which the frame 4 is moveably connected.

The frame 4 is arranged to enclose or encircle a part of the tubular body 6 when the heating apparatus 1 is in operation. In order to enclose or encircle the part of the tubular body 6, an embodiment may be provided wherein the frame 4 comprises e.g. two releasably arranged arcuate sections connected at e.g. two opposing sides 14 of the frame 4. This may be implemented using e.g. two sections with a hinge interconnecting the sections, allowing to move the entire frame 4 and support structure 2 over the tubular body 6 at a remote site.

The frame 4 further comprises thermal emitters 10 circumferentially arranged around the part of the tubular body 6 for heating engagement therewith. The circumferential arrangement of the thermal emitters 10 can be seen as being essentially congruent in relation to the circumferential shape of the tubular body 6. In the depicted embodiment the circumferential arrangement of the thermal emitters 10 may be circular, closely matching a circular circumferential shape of the tubular body 6.

According to the invention, the heating apparatus 1 further comprises an oscillating actuator 12 connected to the support structure 2 and the frame 4, wherein the oscillating actuator 12 is arranged to impose an oscillating movement *mo* of the frame 4 with respect to the support structure 2 in circumferential direction around the part of the tubular body 6, as shown with the double arrow *mo* in Figure 1.

The heating apparatus 1, in particular the oscillating actuator 12 of the present invention, improves homogenous and uniform heating of the tubular body 6. When the heating apparatus 1 is in operation an outer surface part of the tubular body 6 to be heated is subjected to heating zones 16, 18, wherein each heating zone is associated with a corresponding thermal emitter 10 providing said heating zone to the tubular body 6.

The heating zones 16, 18 on the tubular body 6 during operation abut in circumferential direction, as determined by the number of thermal emitters 10 used in the frame 4, the radiation pattern of the thermal emitters 10 and the circumferential arrangement around the tubular body 6. In further embodiments, the heating zones 16, 18 on the target surface (i.e. the tubular body 6) may be separated by a non-irradiated gap 19.

For reasons that will become clear hereunder, it is important to note that each heating zone 16, 18 of a thermal emitter 10 may or may not provide a homogenous or uniform temperature distribution by itself. For example, it is conceivable that a heating zone 16, 18 provides a higher heating intensity somewhere in its center compared to, say, a boundary region of the heating zone in question.

Many prior art heating apparatuses utilizing thermal emitters often suffer from "cold spots" or inhomogeneous and non-uniform heating of e.g. a sealing sleeve or heat shrinkable sealing sleeve around a pipe. Such inhomogeneous and non-uniform heating may cause insufficient and inadequate application of the tubular body 6 to the pipe 8. This, in turn, may lead to moisture ingress and/or dirt ingress, compromising the quality of the produced seal.

According to the invention, the oscillating actuator 12 minimizes the occurrence of inhomogeneous and non-uniform heating of the tubular body 6 in a heating apparatus utilizing separate thermal emitters 10. Through oscillating movement the oscillating actuator 12 ensures that the part of the tubular body 6 to be heated is subjected to a substantially equal amount of thermal energy when the heating apparatus 1 is in operation. And because each projected heating zone 16, 18 of the thermal emitters 10 is moving across the tubular body 6, a substantially equal amount of thermal energy is projected across the tubular body 6 improving its application to the pipe 8.

To further improve homogenous and uniform heating of the tubular body 6, an embodiment is provided wherein the heating apparatus 1, e.g. the support structure 2, comprises a drive actuator arranged to provide longitudinal movement of the frame 4 with respect to the tubular body 6. This embodiment allows for further improvements to the homogenous and uniform distribution of thermal energy in longitudinal direction emitted by the one or more thermal emitters 10. Therefore, homogenous heating of the tubular body 6 is not only provided in circumferential direction but also in the longitudinal direction.

In a further embodiment, the oscillating actuator 12 and drive actuator are simultaneously operable, thus combining circumferential distribution and longitudinal distribution of thermal energy projected by the thermal emitters 10. The tubular body 6 is thus subjected to a homogenous heat treatment in circumferential and longitudinal direction, improving the application of the tubular body 6 to the pipe 8.

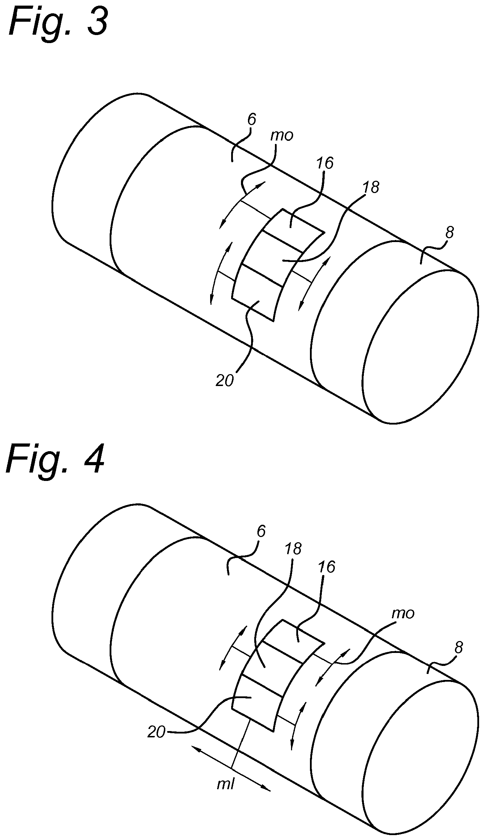

In an embodiment, each of the thermal emitters 10 provides a beam irradiating a target surface on the tubular body 6 in operation, and wherein the thermal emitters 10 are mutually separated (e.g. spaced) at a circumferential separation distance *dh* such that the target surface of one of the thermal emitters 10 abuts the target surface of an adjacent one of the thermal emitters 10. Note that a target surface irradiated by an associated thermal emitter 10 may be regarded as a heating zone 16, 18 as mentioned earlier. This embodiment provides a continuous circumferential arrangement of one or more target surfaces irradiated by the thermal emitters 10 so that "cold spots" are minimized while maximizing a surface area of the tubular body 6 to be heated for a given number of thermal emitters 10 (see also description of Figure 3 and 4 below).

In an alternative embodiment, as depicted in Figure 1, a first target surface or heating zone 16 of a thermal emitter 10 is not directly abutting a second adjacent target surface or heating zone 18 of an adjacent thermal emitter 10b. Instead, the first target surface 16 and adjacent or adjoining second target surface 18 are separated by a non-irradiated area 19. In this embodiment the oscillating actuator 12 is still able to homogenously and uniformly heat the tubular body 6 by oscillating movement of the frame 4. The present invention thus allows for a reduced number of installed thermal emitters 10 on the frame 4 yet still provide homogenous and uniform heating due to oscillatory motion of the frame 4 during operation. In an even further alternative embodiment, the first target surface 16 and adjacent or adjoining second target surface 18 may also partly overlap, so that the oscillating movement then results in a more uniform and even heating of the tubular body 6.

The circumferential separation distance *dh* as shown in Figure 1 between adjacent thermal emitters 10 may be chosen based on e.g. a diameter of the tubular body 6 but also on an oscillation displacement angle *α* of the frame 4. For example, in an embodiment the oscillation displacement angle *α* over which the frame 4 oscillates back and forth during operation equals a relative positional angle between adjacent thermal emitters 10 as measured from a center of the frame 4. This embodiment fully distributes thermal energy in circumferentially direction between adjacent thermal emitters 10 during oscillatory motion of the frame 4, thereby eliminating "cold spots" and thus providing homogenous and uniform heating of the tubular body 6.

In an exemplary embodiment, the circumferential separation distance *dh* between adjacent thermal emitters is between 7 and 20 cm, e.g. 10 cm. This embodiment is advantageous for practical implementations as used for sealing pipe joints 8 as it allows for a larger separation distance between thermal emitters 10 and thus a reduced number of thermal emitters 10 without compromising homogenous and uniform heating of the tubular body 6.

In an advantageous embodiment, each of the thermal emitters 10 is adjustable in a radial direction, so that each thermal emitter 10 can be positioned closer or further away over a radial gap distance *dr* from the tubular body 6. Doing so changes a size of a target surface or heating zone 16, 18 and/or heating intensity associated with a thermal emitter 10. This embodiment allows for different diameters of the tubular body 6 for a given frame size.

In a further embodiment the thermal emitters 10 may be rotatably arranged with respect to the frame 4. In this embodiment the thermal emitters 10 may project thermal energy at a predefined angle to a target surface. For example, in case a conic section between two tubular bodies 6 of different diameters is to be heated as well, then by rotating or tilting the thermal emitters 10 it is possible to provide a directed beam of thermal energy essentially perpendicular to an outer surface part of the conic section. Oscillatory motion provided by the oscillating actuator 12 further improves homogenous heating of the conic section.

In light of the invention, the one or more thermal emitters 10 may be of any kind suitable for emitting thermal energy onto the tubular body 6. In an exemplary embodiment, each of the one or more thermal emitters 10 comprises an infrared thermal emitter, e.g. an infrared halogen heater or an infrared quartz tube with wire heater. In particular, a single thermal emitter 10 may be rated at e.g. 600 W at 115 V, 960 W at 115 V, or even at 1000W at 230 V.

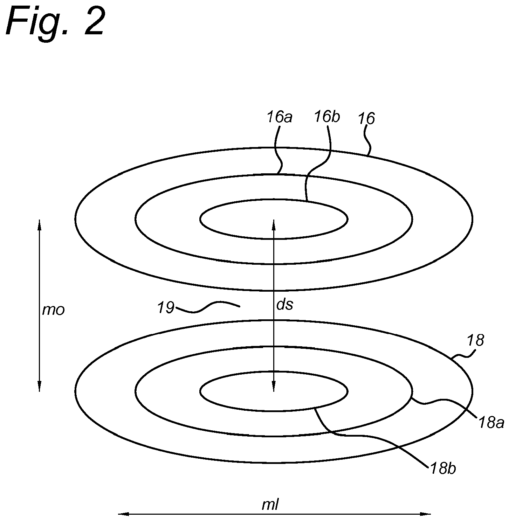

Figure 2 depicts an embodiment of one or more heating zones for heating a part or surface part of a tubular body 6. In the embodiment, two heating zones 16, 18 are depicted each of which is associated with a thermal emitter 10 (now shown). As mentioned earlier, and for ease of reference, a heating zone may be associated with a target surface illuminated by a thermal emitter 10. So in light of the invention, the term "heating zone" and "target surface" may be used interchangeably. As shown in Figure 2, the heating zone of a typical thermal emitter 10 (implemented using a quartz tube) is of an elliptical shape with the major axis corresponding to the main dimension of the thermal emitter 10. Two heating zones 16, 18 as projected on a tubular body 6 by two adjacent thermal emitters 10 maybe separated in a longitudinal direction over a zone separation distance *ds* along an outer surface of the tubular body 6 as measured centre-to-centre between each heating zone 16, 18. The zone separation distance *ds* is taken to be parallel to the circumferential direction of the frame 4.

In applications, each heating zone 16, 18 on the tubular body 6 may not be rectangular or square and need not provide a uniform distribution of heat onto the tubular body 6 when held stationary with respect thereto. This is exemplified in Figure 2 as each heating zone 16, 18 comprises an elliptical or circular shape and comprises a non-uniform temperature distribution indicated by temperature distribution areas 16a, 16b, 18a, 18b, wherein an inner temperature area 16b, 18b of each heating zone 16, 18 may comprise a higher temperate than an outer temperature area 16a, 18a of each heating zone. Note that the depicted shapes of the two heating zones 16, 18 and temperature distribution areas 16a, 16b, 18a, 18b are for illustration purposes only and depend on e.g. the actual type and number of thermal emitters 10 used, the circumferential separation distanced *dh,* the radial separation distance *dr* etc.

In the embodiment shown the two heating zones 16, 18 would yield non-uniform heating of the tubular body 6 in case the two heating zones 16, 18 remain stationary with respect to the tubular body 6. That is, the depicted non-illuminated area 19 would insufficiently heat the tubular body 6 for achieving high quality application to the pipe 8.

In light of the above, the oscillating actuator 12 allows for oscillatory movement *mo* of each heating zone 16, 18 in circumferential direction along the tubular body 6 as indicated by the double arrow *mo* in Figure 2 so as to distribute thermal energy across the tubular body 6. Logically, a larger zone separation distance *ds* would require a larger circumferential movement *mo* of each heating zone 16, 18 for providing a more uniform heating.

According to the invention the oscillating actuator 12 is primarily responsible for circumferential movement *mo* of each heating zone 16, 18 with respect to the tubular body 6. In an embodiment, the heating apparatus 1 may further comprise a longitudinal drive actuator that is arranged for longitudinal movement of the frame 2 with respect to the tubular body 6. So as shown in Figure 2, longitudinal movement *ml* of each heating zone 16, 18 may be provided by the longitudinal drive actuator, wherein each heating zone 16, 18 is moved in longitudinal direction along the tubular body 6 when the heating apparatus 1 is in operation. The oscillating actuator 12 and longitudinal drive actuator therefore allow for homogenous heating in circumferential and longitudinal direction of the tubular body 6.

To further clarify the above Figure 3 and 4 each show an embodiment of one or more heating zones on a tubular body as used in the present invention. In the embodiment three exemplary heating zones 16, 18, 20 are depicted as rectangular areas on the tubular body 6, which may be a sealing sleeve or heat shrinkable sleeve for example. The depicted heating zones 16, 18, 20 may or may not abut each other and may or may not overlap. Whether or not heating zones abut, overlap or are separated depends on e.g. the number of thermal emitters 10 used around the frame 4 and thus the circumferential separation distance *dh* for a given circumferential size of the frame 4.

In Figure 3 the oscillating actuator 12 allows for oscillatory movement *mo* of each of the heating zones 16, 18, 20 in circumferential direction of the tubular body 6. During operation of the heating apparatus 1 the one or more heating zones 16, 18, 20 move in synchronous oscillatory fashion along the tubular body 6 as indicated by the arrows. As a result "cold spots" are avoided as thermal energy from the emitters 10 is distributed across the tubular body 6 in circumferential direction.

Figure 4 depicts a scenario wherein the heating apparatus 1 is provided with a longitude drive actuator to further allow longitudinal movement *ml* of each of the heating zones 16, 18, 20 along the tubular body 6. In this embodiment the entire tubular body 6 can be homogenously and uniformly heated through oscillating movement in circumferential direction as well as movement in longitudinal direction. The longitudinal drive actuator is therefore adapted to move the frame 4 along the tubular body 6, where, simultaneously, the oscillating actuator 12 is adapted to oscillate the thermal emitters 10 in circumferential direction around the tubular body 6.

Note that is possible that the longitudinal drive actuator is adapted to also provide oscillating longitudinal movement as well. So the present invention is not restricted to embodiments wherein the frame 4 is moving lengthwise along the tubular body 6 in one direction only., i.e. the frame 4 may move lengthwise in forward and backward fashion along the tubular body 6.

In an embodiment, the oscillating actuator 12 is arranged to provide a linear or sinusoidal oscillating movement, or an oscillating movement with a predetermined movement pattern. This embodiment allows for considerable control over heat distribution in circumferential direction along the tubular body 6.

In a further embodiment, the oscillating actuator 12 is arranged to provide a linear oscillating movement of the frame 4 with a speed of about 6 cm to 10 cm per second, e.g. 8 cm per second. This embodiment ensures that sufficient thermal energy is received in a distributed manner by the tubular body 6 to allow for e.g. adequate application of the tubular body 6 to the pipe 8.

To return to Figure 1, the number of thermal emitters 10 on the frame 4 may determine the oscillation displacement angle *α* over which the frame 4 oscillates back and forth during operation of the heating apparatus 1. Indeed, for a relatively large number of thermal emitters 10 for a given frame size a relatively small circumferential separation distance *dh* is obtained. As such the oscillation displacement angle *α* can be relatively small, such as 10 degrees, in order to provide homogenous heating in circumferential direction. On the other hand, for a relatively small number of thermal emitters 10 for the given frame size the oscillation displacement angle *α* can be relatively large, such as 90 degrees, in order to provide homogenous heating in circumferential direction of the tubular body 6.

In view of the above an embodiment is provided wherein the oscillating actuator 12 is arranged to provide an oscillating movement with an oscillation displacement angle *α* of less than 90 degrees, e.g. about 10 degrees in circumferential direction.

Also described herein is a heating apparatus in which the frame comprises one or more surface treatment members 10 circumferentially arranged along the frame 4 for surface treatment of an outer surface part of a tubular body 6, such as a sleeve as described above, but can also be used to treat a pipe 8. The one or more surface treatment members 10 e.g. each comprise an (abrasive) brushing member and/or an (abrasive, e.g. sand) blasting member for mechanical treatment of the outer surface part, e.g. removing corroded areas, dirt layers and the like. As with the one or more thermal emitters, each of the one or more surface treatment members 10 provide a treatment zone of limited size on the outer surface part of the tubular body 6, wherein the one or more treatment zones need not overlap.

For example, the oscillating actuator 12 minimizes the occurrence of inhomogeneous surface treatment of the tubular body 8 as the oscillating movement provided by the oscillating actuator 12 allows each single treatment zone to be moved across the outer surface part of the tubular body 8, thereby minimizing the occurrence of untreated spots ("blind spots") of the outer surface part.

Also described herein is a surface treatment apparatus 1 for a tubular body 6 (which can also be a pipe 8), comprising a support structure 2 and a frame 4 moveably suspended in the support structure 2 and arranged to enclose a part of the tubular body 6 in operation. The frame 4 compromises one or more surface treatment members 10 circumferentially arranged around the part of the tubular body 6. The surface treatment apparatus 1 further comprises an oscillating actuator 12 connected to the support structure 2 and the frame 4, wherein the oscillating actuator 12 is arranged to impose an oscillating movement of the frame 4 with respect to the support structure 2 in circumferential direction around the part of the tubular body 6.

The advantage of such a surface treatment apparatus is that an outer surface part of the tubular body receives improved homogenous surface treatment, thus wherein the occurrence of untreated spots ('blind spots") is minimized if not completely avoided during operation of the surface treatment apparatus 1.

In a further aspect the present invention relates to a method for heating a tubular body, such as heating of a sealing sleeve or heat shrinkable sealing sleeve. Reference is made to the elements, components and indications in the embodiments shown in Figure 1 to 4.

The method comprises using one or more thermal emitters 10 arranged in a circumferential direction around a tubular body 6, wherein each of the one or more thermal emitters 10 provides an illumination spot on a target surface (i.e. a heating zone 16, 18, 20) of the tubular body 6, wherein the illumination spots of two adjacent thermal emitters 10 abut each other and wherein the one or more thermal emitters 10 are moved in the circumferential direction in an oscillating manner.

As already disclosed in view of the heating apparatus 1, the method of the present invention eliminates "cold spots" or insufficiently illuminated spots on the tubular boy 6 providing a lower quality application thereof.

To not only uniformly heat the tubular body 6 in circumferential direction, the method may further comprise that the one or more thermal emitters 10 are moved in a longitudinal direction along the tubular body 6. This embodiment ensures that the tubular body 6 is heated in a more uniform fashion along its length.

In a closure patch for application in shrinking a tubular body 6 on a pipe 8 or pipe assembly, the closure patch is adapted to hold the tubular body 6 in position with respect to the pipe 8 or pipe assembly before applying the method as disclosed above. This allows the tubular body 6 to be secured to the pipe 8 or pipe assembly during shrinking and to prevent the tubular body 6 from moving during the shrinking process, which could compromise the quality of the application. The closure patch may comprise a pressure sensitive adhesive tape having a temperature resistant backing and a high temperature resistant adhesive layer, thereby circumventing the use of e.g. a gas torch to apply the closure patch and to reduce application time significantly. The temperature resistant backing may comprise fiber glass or PET.

The present invention embodiments have been described above with reference to a number of exemplary embodiments as shown in the drawings. Modifications and alternative implementations of some parts or elements are possible, and are included in the scope of protection as defined in the appended claims.

## Claims

1. Heating apparatus for heating a tubular body, comprising a support structure (2) and a frame (4) moveably suspended in the support structure (2) and arranged to enclose an outer surface part of the tubular body (6) in operation,
the frame (4) comprising thermal emitters (10) circumferentially arranged around the outer surface part of the tubular body (6), in operation **characterized in that** the heating apparatus (1) further comprises
an oscillating actuator (12) connected to the support structure (2) and the frame (4), wherein the oscillating actuator (12) is arranged to impose an oscillating movement of the frame (4) with respect to the support structure (2) in circumferential direction around the outer surface part of the tubular body (6).

2. Heating apparatus according to claim 1, wherein the support structure (2) is provided with a drive actuator arranged to provide longitudinal movement of the frame (4) with respect to the tubular body (6).

3. Heating apparatus according to claim 2, wherein the oscillating actuator (12) and drive actuator are simultaneously operable.

4. Heating apparatus according to any one of claims 1-3, wherein each of the thermal emitters (10) provides a beam irradiating a target surface on the tubular body (6) in operation, and
the thermal emitters (10) being mutually separated at a circumferential separation distance (*dh*) such that the target surface of one of the thermal emitters (10) abuts the target surface of an adjacent one of the thermal emitters (10).

5. Heating apparatus according to claim 4, wherein the circumferential separation distance (*dh*) between adjacent thermal emitters is between 7 and 20 cm, e.g. 10 cm.

6. Heating apparatus according to any one of claim 1-5, wherein each of the thermal emitters (10) is adjustable in a radial direction.

7. Heating apparatus according to any one of claim 1-6, wherein each of the thermal emitters (10) comprises an infrared thermal emitter.

8. Heating apparatus according to any one of claims 1-7, wherein the oscillating actuator (12) is arranged to provide a linear or sinusoidal oscillating movement, or an oscillating movement with a predetermined movement pattern.

9. Heating apparatus according to any one of claims 1-7, wherein the oscillating actuator (12) is arranged to provide a linear oscillating movement with a speed of about 6 to 10 cm per second, e.g. 8 cm per second.

10. Heating apparatus according to any one of claims 1-9, wherein the oscillating actuator (12) is arranged to provide an oscillating movement with an oscillation displacement angle *α* of less than 90 degrees, e.g. about 10 degrees in the circumferential direction.

11. Method for heating a tubular body using thermal emitters (10) arranged in a circumferential direction around the tubular body (6), wherein each of the thermal emitters (10) provides a heating zone on a target surface of an outer surface part of the tubular body (6), and the heating zones of two adjacent thermal emitters (10) abut each other, and wherein the thermal emitters (10) are moved in the circumferential direction in an oscillating manner.

12. Method according to claim 11, wherein the thermal emitters (10) are moved in a longitudinal direction along the tubular body.

## Patentansprüche

1. Heizvorrichtung zum Erwärmen eines rohrförmigen Körpers, die eine Stützstruktur (2) und einen Rahmen (4) umfasst, der beweglich in der Stützstruktur (2) aufgehängt und so angeordnet ist, dass er einen äußeren Oberflächenteil des in Betrieb stehenden, rohrförmigen Körpers (6) umschließt,
wobei der Rahmen (4) Wärmestrahler (10) umfasst, die in Umfangsrichtung um den äußeren Oberflächenteil des in Betrieb stehenden, rohrförmigen Körpers (6) herum angeordnet sind, **dadurch gekennzeichnet, dass** die Heizvorrichtung (1) ferner
einen oszillierenden Aktuator (12) umfasst, der mit der Stützstruktur (2) und dem Rahmen (4) verbunden ist, wobei der oszillierende Aktuator (12) so angeordnet ist, dass er eine oszillierende Bewegung des Rahmens (4) in Bezug auf die Stützstruktur (2) in Umfangsrichtung um den äußeren Oberflächenteil des rohrförmigen Körpers (6) herum erzwingt.

2. Heizvorrichtung nach Anspruch 1, wobei die Stützstruktur (2) mit einem Antriebsaktuator versehen ist, der so angeordnet ist, dass er eine Längsbewegung des Rahmens (4) in Bezug auf den rohrförmigen Körper (6) ermöglicht.

3. Heizvorrichtung nach Anspruch 2, bei der der oszillierende Aktuator (12) und der Antriebsaktuator gleichzeitig betreibbar sind.

4. Heizvorrichtung nach einem der Ansprüche 1 bis 3, wobei jeder der Wärmestrahler (10) einen Strahl liefert, der eine Zielfläche auf dem in Betrieb stehenden, rohrförmigen Körper (6) bestrahlt, und
wobei die Wärmestrahler (10) in einem Umfangs-Trennungsabstand (*dh*) voneinander getrennt sind, so dass die Zieloberfläche eines der thermischen Emitter (10) an die Zieloberfläche eines benachbarten der Wärmestrahler (10) anstößt.

5. Heizvorrichtung nach Anspruch 4, wobei der Umfangs-Trennungsabstand (*dh*) zwischen benachbarten Wärmestrahlern in Umfangsrichtung zwischen 7 und 20 cm, z.B. 10 cm, beträgt.

6. Heizvorrichtung nach einem der Ansprüche 1 bis 5, wobei jeder der Wärmestrahler (10) in radialer Richtung einstellbar ist.

7. Heizvorrichtung nach einem der Ansprüche 1 bis 6, wobei jeder der Wärmestrahler (10) einen Infrarot-Wärmestrahler umfasst.

8. Heizvorrichtung nach einem der Ansprüche 1 bis 7, wobei der oszillierende Aktuator (12) so angeordnet ist, dass er eine lineare oder sinusförmige oszillierende Bewegung oder eine oszillierende Bewegung mit einem vorbestimmten Bewegungsmuster erzeugt.

9. Heizvorrichtung nach einem der Ansprüche 1 bis 7, wobei der oszillierende Aktuator (12) so angeordnet ist, dass er eine lineare oszillierende Bewegung mit einer Geschwindigkeit von etwa 6 bis 10 cm pro Sekunde, z.B. 8 cm pro Sekunde, erzeugt.

10. Heizvorrichtung nach einem der Ansprüche 1 bis 9, wobei der oszillierende Aktuator (12) so angeordnet ist, dass er eine oszillierende Bewegung mit einem Oszillationsverschiebungswinkel *α* von weniger als 90 Grad, z.B. etwa 10 Grad in der Umfangsrichtung, erzeugt.

11. Verfahren zum Erwärmen eines rohrförmigen Körpers unter Verwendung von Wärmestrahlern (10), die in einer Umfangsrichtung um den rohrförmigen Körper (6) herum angeordnet sind, wobei jeder der Wärmestrahler (10) eine Heizzone auf einer Zieloberfläche eines Außenflächenteils des rohrförmigen Körpers (6) bereitstellt und die Heizzonen zweier benachbarter Wärmestrahler (10) aneinander anstoßen, und wobei die Wärmestrahler (10) in Umfangsrichtung oszillierend bewegt werden.

12. Verfahren nach Anspruch 11, wobei die Wärmestrahler (10) in Längsrichtung entlang des rohrförmigen Körpers bewegt werden.

## Revendications

1. Appareil de chauffage pour chauffer un corps tubulaire, comprenant une structure de support (2) et un cadre (4) suspendu de manière mobile dans la structure de support (2) et agencé pour enfermer une partie de la surface extérieure du corps tubulaire (6) en fonctionnement,
le cadre (4) comprenant des émetteurs thermiques (10) disposés circonférentiellement autour de la partie de la surface extérieure du corps tubulaire (6) en fonctionnement, **caractérisé en ce que** l'appareil de chauffage (1) comprenant en outre
un actionneur oscillant (12) relié à la structure de support (2) et au cadre (4), dans lequel l'actionneur oscillant (12) est agencé pour imposer un mouvement oscillant du cadre (4) par rapport à la structure de support (2) dans la direction circonférentielle autour de la partie de surface extérieure du corps tubulaire (6).

2. Appareil de chauffage selon la revendication 1, dans lequel la structure de support (2) est munie d'un actionneur d'entraînement agencé pour fournir un mouvement longitudinal du cadre (4) par rapport au corps tubulaire (6).

3. Appareil de chauffage selon la revendication 2, dans lequel l'actionneur oscillant (12) et l'actionneur d'entraînement peuvent être actionnés simultanément.

4. Appareil de chauffage selon l'une quelconque des revendications 1 à 3, dans lequel chacun des émetteurs thermiques (10) fournit un faisceau irradiant une surface cible sur le corps tubulaire (6) en fonctionnement, et
les émetteurs thermiques (10) étant mutuellement séparés à une distance de séparation circonférentielle (*dh*) telle que la surface cible de l'un des émetteurs thermiques (10) bute contre la surface cible d'un émetteur thermique adjacent (10).

5. Appareil de chauffage selon la revendication 4, dans lequel la distance de séparation circonférentielle (*dh*) entre des émetteurs thermiques adjacents est comprise entre 7 et 20 cm, par exemple 10 cm.

6. Appareil de chauffage selon l'une quelconque des revendications 1 à 5, dans lequel chacun des émetteurs thermiques (10) est réglable dans une direction radiale.

7. Appareil de chauffage selon l'une quelconque des revendications 1 à 6, dans lequel chacun des émetteurs thermiques (10) comprend un émetteur thermique infrarouge.

8. Appareil de chauffage selon l'une quelconque des revendications 1 à 7, dans lequel l'actionneur oscillant (12) est agencé pour fournir un mouvement oscillant linéaire ou sinusoïdal, ou un mouvement oscillant avec un modèle de mouvement prédéterminé.

9. Appareil de chauffage selon l'une quelconque des revendications 1 à 7, dans lequel l'actionneur oscillant (12) est agencé pour fournir un mouvement oscillant linéaire avec une vitesse d'environ 6 à 10 cm par seconde, par exemple 8 cm par seconde.

10. Appareil de chauffage selon l'une quelconque des revendications 1 à 9, dans lequel l'actionneur oscillant (12) est agencé pour fournir un mouvement oscillant avec un angle de déplacement d'oscillation *α* de moins de 90 degrés, par exemple environ 10 degrés dans la direction circonférentielle.

11. Méthode pour chauffer un corps tubulaire en utilisant des émetteurs thermiques (10) disposés dans une direction circonférentielle autour du corps tubulaire (6), dans laquelle chacun des émetteurs thermiques (10) fournit une zone de chauffage sur une surface cible d'un partie de la surface extérieure du corps tubulaire (6), et les zones de chauffage de deux émetteurs thermiques adjacents (10) sont en butée l'une contre l'autre, et dans laquelle les émetteurs thermiques (10) sont déplacés dans la direction circonférentielle de manière oscillante.

12. Méthode selon la revendication 11, dans laquelle les émetteurs thermiques (10) sont déplacés dans une direction longitudinale le long du corps tubulaire.
